## Europäisches Patentamt

## European Patent Office

## Office européen des brevets

(11) Veröffentlichungsnummer: **0 054 681**
**A1**

(12) **EUROPÄISCHE PATENTANMELDUNG**

(21) Anmeldenummer: **81108857.4**

(22) Anmeldetag: **24.10.81**

(51) Int. Cl.³: **F 16 B 13/06**

(30) Priorität: **23.12.80 DE 3048654**

(43) Veröffentlichungstag der Anmeldung: **30.06.82**
**Patentblatt 82/26**

(84) Benannte Vertragsstaaten: **AT BE CH FR GB IT LI NL**

(71) Anmelder: **artur fischer forschung, Weinhalde 14 - 18, D-7244 Waldachtal 3 (Tumlingen) (DE)**

(72) Erfinder: **Fischer, Artur Dr. h. c., Weinhalde 34, D-7244 Waldachtal 3/Tumlingen (DE)**

(54) **Aus einem Kunststoff-Spreizdübel und einer Befestigungsschraube bestehender Befestigungssatz.**

(57) Aus einem Kunststoff-Spreizdübel und einer Befestigungsschraube bestehender Befestigungssatz, wobei der Spreizdübel einen von seinem vorderen Ende ausgehenden und über einen Teil seiner Länge verlaufenden Schlitz (2) sowie eine Längsbohrung (3) aufweist, in die die mit einem Rundgewinde versehene Befestigungsschraube einschraubbar ist. Um den Befestigungssatz für Deckenmontagen einerseits und für weiche Baustoffe anderseits zu gestalten, weist der Spreizdübel im Bereich des Schlitzes ein in Steigung und Profil dem Rundgewinde der Befestigungsschraube angepaßtes Innengewinde (4) auf, dessen Außen- und Kernmaß geringer ist als die entsprechenden Masse des Rundgewindes der Befestigungsschraube.

EP 1432

<u>Aus einem Kunststoff-Spreizdübel und einer</u>
<u>Befestigungsschraube bestehender Befesti-</u>
<u>gungssatz</u>

Die Erfindung betrifft einen aus einem Kunststoff-Spreizdübel und einer Befestigungsschraube bestehenden, insbesondere für die Verankerung in Decken vorgesehenen Befestigungssatz, wobei der Spreizdübel einen von seinem vorderen Ende
ausgehenden und über einen Teil seiner Länge verlaufenden
Schlitz sowie eine Längsbohrung aufweist, in die die mit
einem Rundgewinde versehene Befestigungsschraube einschraubbar ist.

Die Verankerung von aus Kunststoff bestehenden Spreizdübeln
erfolgt im allgemeinen durch Eindrehen von Holzschrauben, die
bekanntermaßen ein Gewinde mit Spitzprofil aufweisen. Beim
Eindrehen dringen die Gewindespitzen sehr tief in das Dübelmaterial ein und führen somit zu einer Schwächung des Dübelquerschnittes. Ferner wird durch die Gewindeflanke zwar ein
Teil des Dübelwerkstoffes zur Außenwandung hin, jedoch der
größere Teil in Längsrichtung des Dübels verdrängt, so daß
eine Streckung des Dübels erfolgt. Die Gewindeform der in
Verbindung mit Kunststoff-Spreizdübeln zur Anwendung kommenden Befestigungsschrauben ist daher für die Erzielung optimaler Verankerungswerte wenig geeignet.

Aus dem DE-Gbm. 78 25 757 ist zur Vermeidung dieser Nachteile ein Befestigungssatz bekannt, bei dem die Befestigungsschraube mit einem Rundgewinde versehen ist. Durch dieses
Rundgewinde ergibt sich nicht nur eine Verbesserung der
Schraubenfestigkeit durch günstigeren Faserverlauf in der
Befestigungsschraube, sondern auch beim Eindrehen in einen
Kunststoffdübel eine sehr viel stärkere radiale Verdrängung
des Dübelwerkstoffes zur Bohrlochwandung hin, die zu einer er-

0054681

EP 1432

heblich stärkeren Verkeilung und damit Verankerung des Dübels im Bohrloch führt. Durch die sich großflächig in das
Dübelmaterial eindrückenden Gewindekuppen wird der Dübel
an seiner Außenfläche entsprechend der Gewindesteigung ausgewölbt. Damit entsteht eine wellenförmige Spreizdruckverteilung mit erhöhten Spannkräften im Bereich der Gewindekuppen. Wegen der geringen Eindringtiefe des Rundgewindes
in das Dübelmaterial reduziert sich allerdings der Formschluß
zwischen der Befestigungsschraube und dem Dübel, so daß insbesondere bei einer Deckenbefestigung, bei der die Befestigung einer ständigen in Bohrlochrichtung wirkenden Zugkraft
unterliegt, ein Schlupf der Schraube im Dübel eintreten kann.

Bei einer Verankerung des bekannten Befestigungssatzes in
weicheren Baustoffen, wie Gasbeton, Lochziegel oder dgl.
baut sich aufgrund der geringeren Festigkeit des Baustoffes
auch ein geringerer Spreizdruck auf. Dadurch ergibt sich
wegen der geringeren Eindringtiefe des Rundgewindes in das
Dübelmaterial ebenfalls ein geringerer Verbund zwischen
Schraube und Dübel, der zu einem Abfall des Haltewertes führt.

Der Erfindung liegt die Aufgabe zugrunde, den eingangs erwähnten Befestigungssatz derart zu verbessern, daß er sowohl
für Decken, als auch für weiche Baustoffe mit den zuvor erwähnten Vorteilen einsatzfähig ist.

Erfindungsgemäß wird dies dadurch erreicht, daß der Spreizdübel im Bereich des Schlitzes ein in Steigung und Profil
dem Rundgewinde der Befestigungsschraube angepaßtes Innengewinde aufweist, dessen Außen- und Kernmaß geringer ist als die
entsprechenden Maße des Rundgewindes der Befestigungsschraube.

EP 1432

Durch das im Spreizdübel vorgesehene Innengewinde, wird sowohl eine Spreizung als auch ein vorgeformter Formschluß zwischen Schraube und Dübel erzielt. Durch das vorgeformte Gewinde ist die zum Aufspreizen des Dübels zu leistende Verformungsarbeit geringer, da die Gewindekuppen der Befestigungsschraube weniger Material verdrängen müssen. Unabhängig davon wird jedoch der gleiche auf die Bohrlochwandung wirkende Spreizdruck erzeugt, da die Umsetzung der Aufweitung des Dübels durch die Befestigungsschraube in Spreizdruck wegen der fehlenden Verformungsarbeit günstiger ist. Ferner wird auch in den Gewindemulden der Befestigungsschraube Spreizdruck erzeugt, da auch hier durch das vorgeformte Gewinde im Spreizdübel eine Verdrängung stattfinden muß. Damit ergibt sich eine noch gleichmäßigere und damit schonendere Spreizdruckverteilung. Durch den Formschluß zwischen Schraube und Dübel sind somit hohe Haltewerte sowohl in weichen als auch in harten Baustoffen erzielbar ohne daß ein nennenswerter Schlupf auch bei Dauerbelastung eintritt.

In einer weiteren Ausgestaltung der Erfindung kann der Aussen- und Kerndurchmesser des Innengewindes als Ellipsen ausgebildet sein, wobei der größte Ellipsendurchmesser des Gewindeaußenmaßes auf der gesamten Gewindelänge gleich dem größten Ellipsendurchmesser des Kernmaßes ist, während der kleine Ellipsendurchmesser des Außen- und Kernmaßes zum vorderen Dübelende hin gleichmäßig abnehmen. Durch diese spezielle Gestaltung läuft die Profilhöhe des Innengewindes in Richtung zur Schlitzebene des Dübels hin aus. Dadurch ist es möglich, den das Innengewinde und die Längsbohrung des Dübels formenden Kern ohne Drehen auszuziehen, da die beiden durch den Schlitz gebildeten Spreizschenkel nach dem Auseinanderfahren des Unter- und Oberteiles des Spritzwerkzeuges

EP 1432

soweit aufklappen können, daß die Kuppen des Kerns unter den Kuppen des Spreizdübelgewindes weggleiten können.

In der Zeichnung ist ein Ausführungsbeispiel der Erfindung dargestellt. Es zeigen:

Figur 1    den Spreizdübel in ungespreiztem Zustand

Figur 2    den Schnitt gemäß der Schnittlinie I-I

Figur 3    den Schnitt gemäß der Schnittlinie II-II

Figur 4    den Befestigungssatz in eingebautem Zustand.

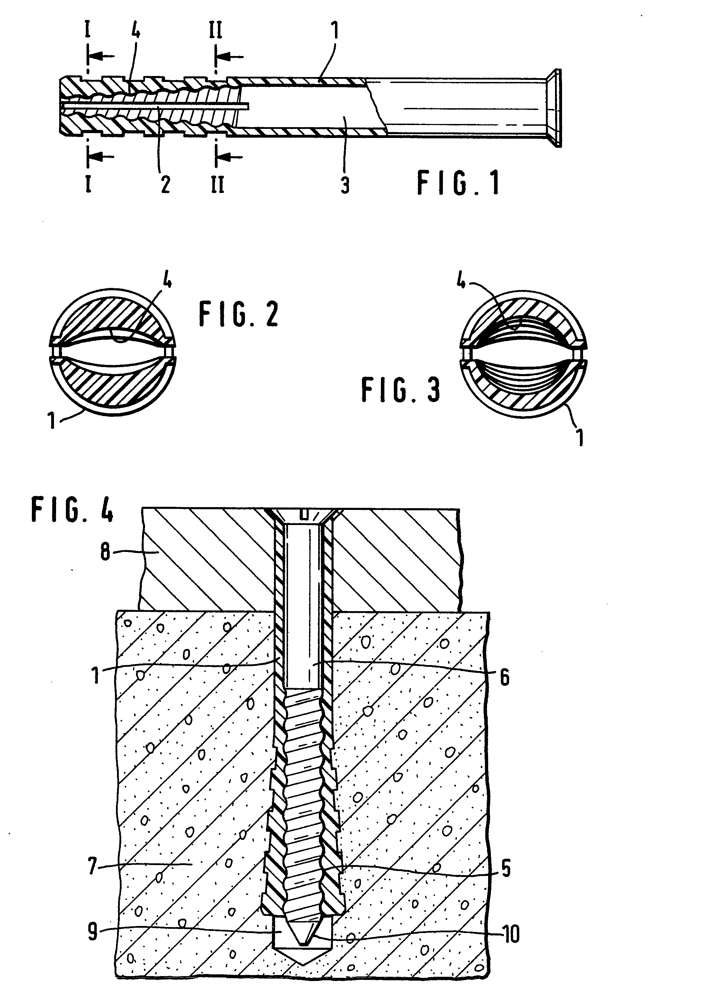

Der Kunststoff-Spreizdübel 1 nach Figur 1 weist einen von seinem vorderen Ende ausgehenden bis über einen Teil seiner Länge verlaufenden Schlitz 2 auf, der sich bis in den zylindrischen Teil der Längsbohrung 3 erstreckt. Im Bereich des Spreizteiles geht die zylindrische Längsbohrung 3 in ein Innengewinde 4 über, dessen Steigung und Gewindeprofil dem Rundgewinde 5 der Befestigungsschraube 6 angepaßt ist, dessen Außen- und Kernmaß jedoch geringer ist als die entsprechenden Maße des Rundgewindes der Befestigungsschraube. In den Querschnittsdarstellungen gemäß Figur 2 und Figur 3 ist erkennbar, daß die Profilhöhe des Innengewindes 4 in Richtung Schlitzebene ausläuft. Diese Gestaltung ergibt sich dadurch, daß der grosse Ellipsendurchmesser sowohl des Kern- als auch des Außenmaßes des Gewindes gleich sind, während der kleine Ellipsendurchmesser unterschiedlich ist. Der kleine Ellipsendurchmesser des Kern- und Außenmaßes des Innengewindes 4 verringert sich in gleichmäßigen Schritten bis zum vorderen Dübelende hin. Daraus ergibt sich eine Verjüngung des Innengewindes 4, die beim Eindrehen der Befestigungsschraube 6 zu einer verstärkten Aufweitung des Dübels in der Bohrlochtiefe führt.

0054681

EP 1432

Die Verankerung des erfindungsgemäßen Dübels 1 erfordert in der Wand 7 und im zu befestigenden Bauteil 8 ein Bohrloch 9, das einen dem Außendurchmesser des Dübels 1 entsprechenden durchgehend gleichen Durchmesser aufweist. Nach dem Einführen des Dübels 1 in das Bohrloch 9 wird die Befestigungsschraube 6 mit dem Rundgewinde 5 zur Befestigung des Bauteiles 8 in den Dübel 1 eingedreht. Zur Verringerung des Eindrehwiderstandes läuft das Rundgewinde 5 der Befestigungsschraube 6 auf der Schraubenspitze 10 aus. Durch das Innengewinde 4 des Dübels 1 ergibt sich ein Formschluß zwischen Befestigungsschraube 6 und Dübel 1, selbst wenn der Spreizdruck bei weichem Mauerwerk wie Gasbeton, Ziegelstein oder dgl. relativ gering ist.

artur fischer forschung

7244 Tumlingen / Waldachtal 3     den 19. Dezember 1980

Ju/Woe

EP 1432

P a t e n t a n s p r ü c h e

1. Aus einem Kunststoff-Spreizdübel und einer Befestigungsschraube bestehender, insbesondere für die Verankerung in Decken vorgesehener Befestigungssatz, wobei der Spreizdübel einen von seinem vorderen Ende
ausgehenden und über einen Teil seiner Länge verlaufenden Schlitz sowie eine Längsbohrung aufweist, in
die die mit einem Rundgewinde versehene Befestigungsschraube einschraubbar ist, dadurch gekennzeichnet,
daß der Spreizdübel im Bereich des Schlitzes ein in
Steigung und Profil dem Rundgewinde der Befestigungsschraube angepaßtes Innengewinde aufweist, dessen Aussen- und Kernmaß geringer ist als die entsprechenden
Maße des Rundgewindes der Befestigungsschraube.

0054681

EP 1432

2. Spreizdübel nach Anspruch 1, dadurch gekennzeichnet,
daß der Außen- und Kerndurchmesser des Innengewindes
als Ellipsen ausgebildet sind, wobei der größte Ellipsendurchmesser des Gewindeaußenmaßes auf der gesamten
Gewindelänge gleich dem größten Ellipsendurchmesser des
Kernmaßes ist, während der kleine Ellipsendurchmesser
des Außen- und Kernmaßes zum vorderen Dübelende hin gleichmäßig abnehmen.

0054681

1 / 1

FIG.1

FIG.2

FIG.3

FIG.4

| | Europäisches Patentamt | **EUROPÄISCHER RECHERCHENBERICHT** | 0054681 Nummer der Anmeldung EP 81 10 8857.4 |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.) |
|---|---|---|---|
| X,Y | <u>DE − A − 2 057 970</u> (BEGANIE FLECHSENHAR) <br> * Fig. 1 * <br> −− | 1,2 | F 16 B 13/06 |
| Y | <u>US − A − 1 460 557</u> (OGDEN) <br> * Fig. 3 * <br> −−  | 2 | |
| Y | <u>US − A − 1 903 241</u> (McINTOSH) <br> * Fig. 3 * <br> −− | 2 | |
| D,A | <u>DE − U − 7 825 757</u> (FISCHER) <br> * Fig. 1 * <br> −− | 1 | **RECHERCHIERTE SACHGEBIETE (Int. Cl.³)** |
| A | <u>AT − B − 186 282</u> (DÜSSELDORFER EISEN- HÜTTENGESELLSCHAFT) <br> * Fig. 1 * <br> −−−− | 1 | F 16 B 13/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 19-03-1982 | ZAPP |

EPA form 1503.1  06.78